# EUROPEAN PATENT SPECIFICATION

(11) **EP 3 881 303 B1**
(45) Date of publication and mention of the grant of the patent: **25.12.2024**
(21) Application number: 19884365.8
(22) Date of filing: 16.10.2019
(51) Int. Cl.: G08B 15/00, G08B 15/02, F41H 9/00

(54) **NON-LETHAL DEFENSIVE FLUID COMPOSITION AND PRESSURIZED DELIVERY SYSTEM**
NICHT-TÖDLICHE DEFENSIVE FLUIDZUSAMMENSETZUNG UND DRUCKABGABESYSTEM
COMPOSITION DE LIQUIDE DÉFENSIF NON LÉTAL ET SYSTÈME DE DISTRIBUTION SOUS PRESSION

(30) Priority: 13.11.2018 US 201862760612 P; 12.07.2019 US 201916509830
(43) Date of publication of application: 22.09.2021
(73) Proprietor: Rankin, David Daniel, Sr., Yadkinville NC 27055 (US)
(72) Inventor: Rankin, David Daniel, Sr., Yadkinville NC 27055 (US)
(74) Representative: Algemeen Octrooi- en Merkenbureau B.V.
(86) International application number: PCT/US2019/056449
(87) International publication number: WO 2020/101833

(56) References cited:
- EP-A1- 1 674 133
- WO-A1-2007/120547
- WO-A2-2006/055640
- JP-U- H0 625 987
- RU-C1- 2 562 993
- US-A- 5 653 970
- US-A1- 2006 054 634
- US-A1- 2006 240 054
- US-A1- 2009 095 494
- US-A1- 2017 087 199

## Description

### Technical Field and Background of the Invention

This invention relates to a defensive fluid and pressurized delivery system for use by individuals, in classrooms, for crowd control, in commercial environments, and for firefighting. Specifically this invention relates to a defensive fluid chemical composition having high lubricity and a gel-like consistency.

In recent years, safety and security has become a top priority for the public in light of tragic events such as mass shootings, home invasions, and rioting. Numerous proposals of how the public can be protected and protect themselves have been discussed on a national and international scale. Many of the solutions to date, such as weapons and pepper spray, are not viable for various reasons.

One solution is for individuals to carry guns for protection. However, guns are not always accessible to the general public. Additionally, guns are often subject to bans in many locations such as schools, private businesses, and public spaces. Another problem is the training and experience required for the safe use and care of guns.

Pepper spray, chemical Mace^{®}, tear gas, and other types of lachrymator agents are frequently used in crowd control and carried as personal protection. The basic idea is that the composition causes extreme irritation and/or inflammation to the target's eyes such that an assailant is disabled. While these methods have had success, many states and schools consider these personal defense sprays to be weapons and have added heavy regulation or outright banned the sale. Schools have generally banned students from carrying these types of sprays. Even in situations where these spray products are permissible, the use of these sprays which inflame or irritate the eyes of an assailant are only effective in close proximity to the assailant where the nose, mouth or eyes can be targeted. This greatly reduces the time for a targeted individual to escape.

There is a need for a product and pressurized delivery system that can be used as a personal defense spray and pre-emptively delay or disable an assailant, increasing the time for an targeted individual to escape.

US2006/240054 discloses a personal defense composition in gel form comprising a marking agent, a thickening agent and water as well as a device for marking a target comprising a pressurized container comprising a propellant and said gel composition.

### Summary of the Invention

It is therefore an aspect of the present invention to provide a defensive fluid composition that disables or delays an assailant and can be applied pre-emptively to a surface.

It is another aspect of the invention to provide a defensive fluid composition which increases the lubricity of a surface.

It is another aspect of the invention to provide a defensive fluid composition delivery system that can be installed in walls and ceilings.

It is another aspect of the invention to provide a defensive fluid composition that is biodegradable, non-toxic, water soluble, non-corrosive, and non-explosive.

These and other objects and advantages of the present invention are achieved in the preferred embodiments set forth below. The invention concerns a lubric gel composition for personal defense which includes glycerine at a concentration ranging from 5 wt% to 10 wt% of the composition, a thickening agent at a concentration ranging from 1.75 wt% to 8.75 wt% of the composition, a detergent at a concentration ranging from 1.03 wt% to 4.07 wt% of the composition, a surfactant at a concentration ranging from 2 wt% to 15 wt% of the composition, and water at a concentration ranging from 66 wt% to 90.21 wt% of the composition.

According to another embedment of the invention, the lubric gel composition includes a preservative at a concentration ranging from 0.01 wt% to 1.00 wt% of the composition.

According to another embodiment of the invention, preservative includes sodium benzoate.

According to another embodiment of the invention, the thickening agent includes guar gum at a concentration ranging from 1 wt% to 5 wt% of the composition.

According to another embodiment of the invention, the thickening agent includes methyl cellulose at a concentration ranging from 0.75 wt% to 3.75 wt% of the composition.

According to another embodiment of the invention, the detergent includes sodium lauryl sulfate at a concentration ranging from 1 wt% to 4 wt% of the composition.

According to another embodiment of the invention, the detergent includes sodium dioctyl sulfosuccinate at a concentration ranging from 0.03 wt% to 0.07 wt% of the composition.

According to another embodiment of the invention, the surfactant includes a non-ionic, anionic, and/or an amphoteric surfactant.

According to another embodiment of the invention, the surfactant includes an amphoteric surfactant at a concentration ranging from 2 wt% to 40 wt% of the surfactant.

According to another embodiment of the invention, the amphoteric surfactant includes coco amino propionate.

According to another embodiment of the invention, the water is deionized water.

According to another embodiment of the invention, an additive is selected from the group essentially consisting of: a dye, a luminescent, and a phosphorescent.

According to another embodiment of the invention, a bag-on-valve spray canister is adapted to contain and spray the composition.

According to another embodiment of the invention, a pressurized composition delivery system is provided which includes a pressurized reservoir containing the composition and having a fluid outlet through which the composition can flow. A valve is connected to the fluid outlet of the reservoir having a closed position preventing flow of composition out of the reservoir and an open position enabling the composition to flow. A sprinkler head is adapted to receive and spray the composition when the valve is open.

According to another embodiment not according to the invention, a lubric gel composition for personal defense is provided which includes glycerin at a concentration ranging from 5 wt% to 10 wt% of the composition. Guar gum is included at a concentration ranging from 1 wt% to 5 wt% of the composition. Sodium benzoate is included at a concentration ranging from 0.01 wt% to 1 wt% of the composition. Methyl cellulose is included at a concentration ranging from 0.75 wt% to 3.75 wt% of the composition. Sodium lauryl sulfate is included at a concentration ranging from 1 wt% to 4 wt% of the composition. Sodium dioctyl sulfosuccinate is included at a concentration ranging from 0.03 wt% to 0.07 wt% of the composition. A surfactant is included which has a non-ionic surfactant, a anionic surfactant, and/or an amphoteric surfactant at a concentration ranging from 2 wt% to 15 wt% of the composition. Deionized water is included at a concentration ranging from 66 wt% to 90.21 wt% of the composition.

According to another embodiment of the invention, a pressurized lubric gel composition delivery system for personal defense is provided which has a pressurized reservoir containing the composition and having a fluid outlet through which the composition can flow. A valve is connected to the fluid outlet of the reservoir having a closed position preventing flow of composition out of the reservoir and an open position enabling flow of composition out of the reservoir. A sprinkler head is adapted to receive and spray the composition when the valve is open.

According to another embodiment of the invention, a trigger is positioned remote from the delivery system and connected to the valve by a wire or by wireless technology whereby activating the trigger opens the valve.

According to another embodiment of the invention, a comprising a refilling system is provided which has a fluid inlet on the reservoir through which the composition can flow. A valve is connected to the fluid inlet adapted to prevent the flow of composition out of the reservoir through the fluid inlet. A refilling fitting is connected to the valve and adapted to receive composition for refilling the reservoir. A pressure gauge is connected to the reservoir to monitor pressure within the reservoir.

According to another embodiment of the invention, the sprinkler head is positioned on a wall or ceiling or a building.

### Brief Description of the Drawings

The present invention is best understood when the following detailed description of the invention is read with reference to the accompanying drawings, in which:
Figure 1 is a partial cutaway of a hand-held pressurized composition delivery system;
Figure 2 is a schematic view of a pressurized composition delivery system installed on a ceiling; and
Figure 3 is a schematic view of a pressurized composition delivery system installed on a wall.

### Detailed Description of the Preferred Embodiment

A lubric gel composition which can be applied to various surfaces for personal defense and a pressurized lubric gel composition delivery system is described. It is envisioned that the composition may be sprayed onto a wide variety of surfaces such as concrete, tile, and wood or sprayed directly at an individual. When applied to surfaces such as a walking surface the composition creates a slick surface for the purposes of disabling or delaying an individual. A coating of the composition on an individual's hands increases difficulty of manipulating items such as weapons and doorknobs. The composition maintains a gel-like consistency when stored, sprayed, or coating a surface and does not foam in its natural state. This gel-like quality is important for maintaining the lubricity of the composition.

In addition to the primary purpose of increasing lubricity of a surface, the composition also has secondary features such as fire suppression/extinguishing and contact irritation of eyes/nose/mouth. Protective eyewear having a coat of the composition will smear when wiped and reduce visibility. The composition is also environmentally friendly, non-toxic, non-corrosive, non-lethal, and easily washable off surfaces.

Primary components of the composition include glycerine, a thickening agent, a detergent, a surfactant, and water. Optionally, a preservative may be included. Other additives are envisioned such as dyes, illuminates, and/or phosphorescents which leave a detectable signature on any individuals who came into contact with the defensive fluid. Each of the components may include multiple substances, or one substance may function as two of the components. The water is preferably deionized water at a concentration ranging from 66 wt% to 90.21 wt% of the overall solution.

A pre-mix is prepared which contains the glycerine and the thickening agent. The glycerine is preferably at a concentration ranging from 5 wt% to 10 wt% of the overall composition. The glycerine coats the thickening agent to reduce clumping when exposed to water. The glycerine also acts as a barrier film on hard surfaces and enhances lubricity.

The thickening agent serves to increase the film strength and enhance lubricity. The thickening agent is preferably at a concentration ranging from 1.95 wt% to 13.75 wt% of the overall composition. In one embodiment of the invention guar gum, methyl cellulose, and polyethylene oxide are included in the overall composition as thickening agents. Guar gum is preferably at a concentration ranging from 1 wt% to 5 wt% of the overall composition and methyl cellulose is preferably at a concentration ranging from 0.75 wt% to 3.75 wt% of the overall composition. Polyethylene oxide is preferably at a concentration ranging from 0.2 wt% to 5 wt% of the composition.

The detergent serves as a wetting agent to ensure the surface is wetted and can potentially enhance lubricity. The detergent is preferably at a concentration ranging from 1.03 wt% to 4.07 wt% of the overall composition. In one embodiment of the invention the detergent includes of sodium lauryl sulfate and sodium dioctyl sulfosuccinate. Sodium lauryl sulfate is preferably at a concentration ranging from 1 wt% to 4 wt% of the overall composition and sodium dioctyl sulfosuccinate is preferably at a concentration ranging from .03 wt% to .07 wt% of the overall composition.

The surfactant serves to slow the rate of evaporation and provide enhanced lubricity. The surfactant is preferably at a concentration ranging from 2 wt% to 15 wt% of the overall concentration. In one embodiment, the surfactant comprises a non-ionic surfactant, an anionic surfactant, and an amphoteric surfactant. The amphoteric surfactant is coco amino propionate and is preferably at a concentration ranging from 2 wt% to 40 wt% of the surfactant.

A preservative may be added to the composition in order to increase longevity or self-life of the composition. The preservative is preferably at a concentration ranging from 0.01 wt% to 1.00 wt% of the overall composition. In one embodiment the preservative is sodium benzoate.

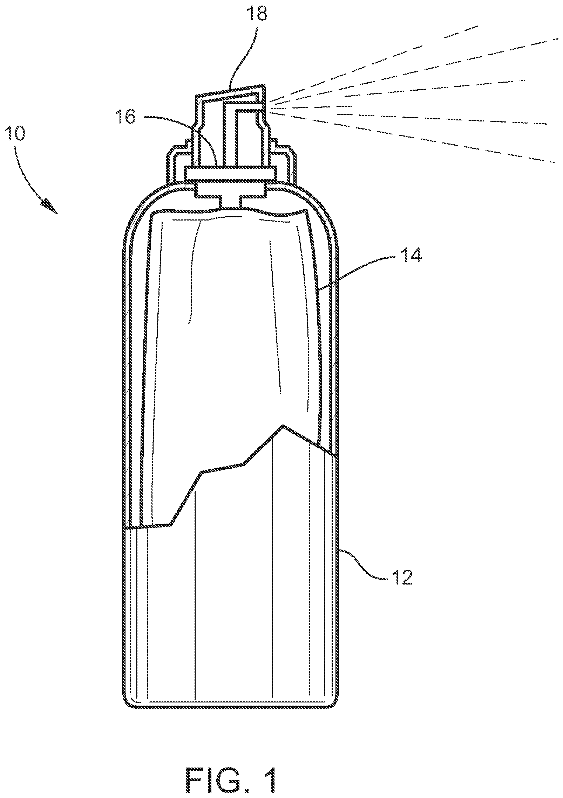

Referring now to Figure 1, a pressurized hand-held composition delivery device 10 (not according to the invention) is shown. The hand-held device 10 utilizes 'bag-on-valve' technology. A pressurized canister 12 contains a bag 14 which holds the composition. The hand-held device 10 is operated by engaging a trigger 18 which cooperates with a valve 16 to spray the composition.

The hand-held device 10 is able to spray the composition in streams of twenty feet or more with precision. Other applications where the composition would be applied, such as utility poles before/during parades or riots may be performed with other spray devices having varying strength of spray, width of spray, and shape of spray depending on the application. Other portable delivery systems are envisioned such as conventional spray bottles.

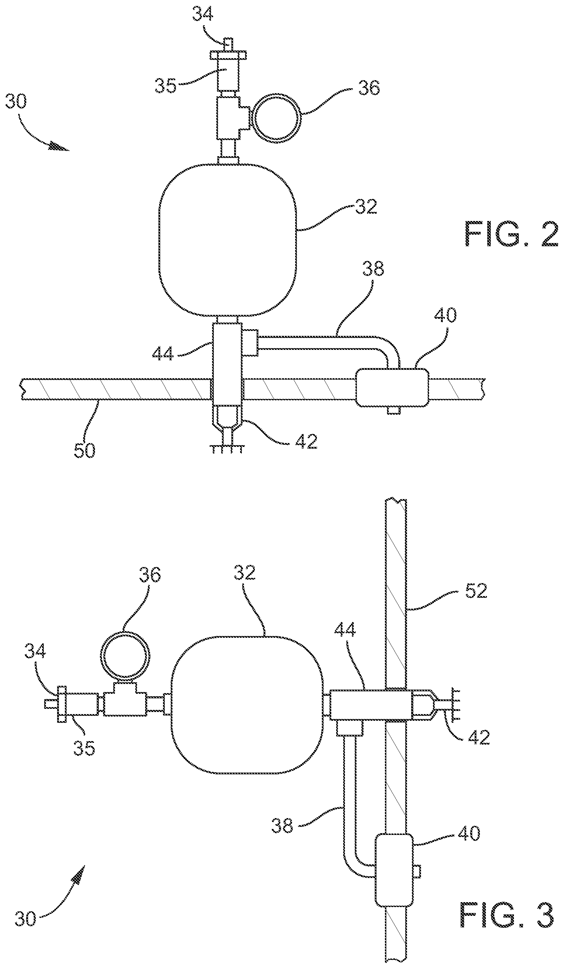

Figures 2 and 3 show a pressurized composition delivery system 30 where the delivery system 30 is installed in a ceiling 50 or a wall 52 respectively. This delivery system 30 has a pressurized reservoir 32 containing the composition. A switch 40 is connected to a valve 44 such as a solenoid valve which controls flow of the composition out of the reservoir 32 and into a sprinkler head 42. Wires travel from the switch 40 to the valve 44 through a conduit 38. When the switch 40 is activated, the valve 44 opens and allows the composition to flow into the sprinkler head 42 and spray outward from the ceiling 50 or wall 52.

The composition, which is sprayed from a ceiling 50 or a wall 52, can serve multiple functions. The sprayed defensive fluid will coat the surface of the floor, creating a slick/slippery floor. In an emergency situation, a slippery floor can slow down and possibly deter an assailant, giving others more time to run and/or hide. The additional fire extinguishing feature of the defensive fluid allows for the spray to be used on fires. It is also envisioned that existing fire systems can be retrofitted to accommodate the composition.

Pressure on the delivery system 30 is monitored by a pressure gauge 36 connected to the reservoir 32. When the pressure is low, or after the delivery system 30 has been emptied of the composition, the reservoir 32 has a refill fitting 34 that can be used to refill the delivery system 30. The refill fitting 34 may be similar to conventional air fittings. A one-way check valve 35 is positioned between the refill fitting 34 and the reservoir 32 to prevent backflow. In other embodiments the emptied reservoir 32 can be replaced with a full reservoir 32 instead of being refilled.

This delivery system 30 may be installed in ceilings 50 in a similar manner as fire sprinkler systems such that the switch 40 is located in an accessible location and only the sprinkler head 42 protrudes through the ceiling 50. Similarly, the delivery system 30 can be installed in a wall 52 where the sprinkler head 42 protrudes from the wall 52. Sprinkler heads 42 can be angled for maximum effectiveness in each application.

Other configurations are also envisioned where the delivery system 30 has multiple sprinkler heads 42 per reservoir 32 or where a single switch 40 controls multiple valves 44 and reservoirs 32. Plumbing, such as pipes, can be used to connect the reservoir 32 to the valve 44 and connect the valve 44 to the sprinkler head 42.

Switches 40 can be simple buttons, switches similar to light switches, or pull stations similar to fire alarms. They can also be encased to prevent accidental activation. Since the switch 40 is connected by wires, it can be located anywhere that can be hard wired. The wires can be in long conduits 38 or added to pre-existing building wiring. In lieu of hard wiring the valve 44 can be controlled by wireless technology when the switch 40 is activated.

A lubric gel composition and pressurized delivery system according to the invention have been described with reference to specific embodiments and examples. Various details of the invention may be changed without departing from the scope of the invention. Furthermore, the foregoing description of the preferred embodiments of the invention and best mode for practicing the invention are provided for the purpose of illustration only and not for the purpose of limitation, the invention being defined by the claims.

## Claims

1. A lubric gel composition for personal defense, comprising:
(a) glycerine at a concentration ranging from 5 wt% to 10 wt% of the composition;
(b) a thickening agent at a concentration ranging from 1.95 wt% to 13.75 wt% of the composition;
(c) a detergent at a concentration ranging from 1.03 wt% to 4.07 wt% of the composition;
(d) a surfactant at a concentration ranging from 2 wt% to 15 wt% of the composition; and
(e) water at a concentration ranging from 66 wt% to 90.21 wt% of the composition.

2. The lubric gel composition of claim 1, further comprising a preservative at a concentration ranging from 0.01 wt% to 1.00 wt% of the composition, wherein the preservative preferably includes sodium benzoate.

3. The lubric gel composition according to claim 1, wherein the thickening agent includes guar gum at a concentration ranging from 1 wt% to 5 wt% of the composition.

4. The lubric gel composition according to claim 1, wherein the thickening agent includes methyl cellulose at a concentration ranging from 0.75 wt% to 3.75 wt% of the composition.

5. The lubric gel composition according to claim 1, wherein the thickening agent includes polyethylene oxide at a concentration ranging from 0.2 wt% to 5 wt% of the composition.

6. The lubric gel composition according to claim 1, wherein the detergent includes sodium lauryl sulfate at a concentration ranging from 1 wt% to 4 wt% of the composition.

7. The lubric gel composition according to claim 1, wherein the detergent includes sodium dioctyl sulfosuccinate at a concentration ranging from 0.03 wt% to 0.07 wt% of the composition.

8. The lubric gel composition according to claim 1, wherein the surfactant includes a non-ionic, anionic, and/or an amphoteric surfactant.

9. The lubric gel composition according to claim 1, wherein the surfactant preferably includes an amphoteric surfactant at a concentration ranging from 2 wt% to 40 wt% of the surfactant.

10. The lubric gel composition according to claim 1, wherein the water is deionized water.

11. The lubric gel composition according to claim 1, further comprising an additive selected from the group essentially consisting of: a dye, a luminescent, and a phosphorescent.

12. A pressurized lubric gel composition delivery system for personal defense, comprising:
(a) a pressurized reservoir containing the composition according to any one or more of the preceding claims and having a fluid outlet through which the composition can flow;
(b) a valve connected to the fluid outlet of the reservoir having a closed position preventing flow of composition out of the reservoir and an open position enabling flow of composition out of the reservoir; and
(c) a sprinkler head positioned on a ceiling or wall and adapted to receive and spray the composition when the valve is open.

13. The pressurized lubric gel composition delivery system according to claim 12, wherein a trigger is positioned remote from the delivery system and connected to the valve by a wire or by wireless technology whereby activating the trigger opens the valve.

14. The pressurized lubric gel composition delivery system according to any one or more of claims 12-13, further comprising a refilling system, the refilling system comprising:
(a) a fluid inlet on the reservoir through which the composition can flow;
(b) a valve connected to the fluid inlet adapted to prevent the flow of composition out of the reservoir through the fluid inlet;
(c) a refilling fitting connected to the valve and adapted to receive composition for refilling the reservoir; and
(d) a pressure gauge connected to the reservoir to monitor pressure within the reservoir.

## Patentansprüche

1. Schmiergelzusammensetzung zur persönlichen Verteidigung, umfassend:
(a) Glyzerin in einer Konzentration im Bereich von 5 Gew.-% bis 10 Gew.-% der Zusammensetzung;
(b) ein Verdickungsmittel in einer Konzentration im Bereich von 1,95 Gew-% bis 13,75 Gew.-% der Zusammensetzung;
(c) ein Waschmittel in einer Konzentration im Bereich von 1,03 Gew.- % bis 4,07 Gew.-% der Zusammensetzung;
(d) ein Tensid in einer Konzentration im Bereich von 2 Gew.-% bis 15 Gew.-% der Zusammensetzung; und
(e) Wasser in einer Konzentration im Bereich von 66 Gew.-% bis 90,21 Gew.-% der Zusammensetzung.

2. Schmiergelzusammensetzung nach Anspruch 1, ferner umfassend ein Konservierungsmittel in einer Konzentration im Bereich von 0,01 Gew.-% bis 1,00 Gew.-% der Zusammensetzung, wobei das Konservierungsmittel vorzugsweise Natriumbenzoat aufweist.

3. Schmiergelzusammensetzung nach Anspruch 1, wobei das Verdickungsmittel Guargummi in einer Konzentration im Bereich von 1 Gew.-% bis 5 Gew.-% der Zusammensetzung aufweist.

4. Schmiergelzusammensetzung nach Anspruch 1, wobei das Verdickungsmittel Methylcellulose in einer Konzentration im Bereich von 0,75 Gew.-% bis 3,75 Gew.-% der Zusammensetzung aufweist.

5. Schmiergelzusammensetzung nach Anspruch 1, wobei das Verdickungsmittel Polyethylenoxid in einer Konzentration im Bereich von 0,2 Gew.-% bis 5 Gew.-% der Zusammensetzung aufweist.

6. Schmiergelzusammensetzung nach Anspruch 1, wobei das Waschmittel Natriumlaurylsulfat in einer Konzentration im Bereich von 1 Gew.-% bis 4 Gew.-% der Zusammensetzung aufweist.

7. Schmiergelzusammensetzung nach Anspruch 1, wobei das Waschmittel Natriumdioctylsulfosukzinat in einer Konzentration im Bereich von 0,03 Gew.-% bis 0,07 Gew.-% der Zusammensetzung aufweist.

8. Schmiergelzusammensetzung nach Anspruch 1, wobei das Tensid ein nichtionisches, anionisches und/oder ein amphoteres Tensid aufweist.

9. Schmiergelzusammensetzung nach Anspruch 1, wobei das Tensid vorzugsweise ein amphoteres Tensid in einer Konzentration im Bereich von 2 Gew.-% bis 40 Gew.-% des Tensids aufweist.

10. Schmiergelzusammensetzung nach Anspruch 1, wobei das Wasser entionisiertes Wasser ist.

11. Schmiergelzusammensetzung nach Anspruch 1, ferner umfassend ein Additiv, das aus der Gruppe, im Wesentlichen bestehend aus einem Farbstoff, einem lumineszierenden Mittel und einem phosphoreszierenden Mittel ausgewählt ist.

12. Schmiergelzusammensetzungsdruckabgabesystem zur persönlichen Verteidigung, umfassend:
(a) einen Druckbehälter, der die Zusammensetzung nach einem oder mehreren der vorhergehenden Ansprüche enthält, mit einem Fluidauslass, durch den die Zusammensetzung fließen kann;
(b) ein Ventil, das mit dem Fluidauslass des Behälters verbunden ist, mit einer geschlossenen Position, die den Ausfluss der Zusammensetzung aus dem Behälter verhindert, und einer offenen Position, die den Ausfluss der Zusammensetzung aus dem Behälter erlaubt; und
(c) einen Sprinklerkopf, der an einer Decke oder Wand positioniert und dazu angepasst ist, die Zusammensetzung zu versprühen, wenn das Ventil geöffnet ist.

13. Schmiergelzusammensetzungsdruckabgabesystem nach Anspruch 12, wobei ein Auslöser fern von dem Abgabesystem positioniert und mittels Draht oder mittels Funktechnologie mit dem Ventil verbunden ist, wobei das Aktivieren des Triggers das Ventil öffnet.

14. Schmiergelzusammensetzungsdruckabgabesystem nach einem oder mehreren der Ansprüche 12-13, ferner umfassend ein Nachfüllsystem, wobei das Nachfüllsystem umfasst:
(a) einen Fluideinlass an dem Behälter, durch den die Zusammensetzung fließen kann;
(b) ein Ventil, das mit dem Fluideinlass verbunden und dazu ausgelegt ist, zu verhindern, dass die Zusammensetzung durch den Fluideinlass aus dem Behälter ausfließt;
(c) einen Nachfüllanschluss, der mit dem Ventil verbunden und dazu angepasst ist, die Zusammensetzung zum Nachfüllen des Behälters aufzunehmen; und
(d) ein Druckmesser, der mit dem Behälter verbunden ist, um den Druck in dem Behälter zu überwachen.

## Revendications

1. Composition de gel lubrifiant pour la défense personnelle, comprenant :
(a) de la glycérine à une concentration allant de 5% en poids à 10% en poids de la composition ;
(b) un agent épaississant à une concentration allant de 1,95% en poids à 13,75% en poids de la composition ;
(c) un détergent à une concentration allant de 1,03% en poids à 4,07% en poids de la composition ;
(d) un tensioactif à une concentration allant 2% en poids à 15% en poids de la composition ; et
(e) de l'eau à une concentration allant de 66% en poids à 90,21% en poids de la composition.

2. Composition de gel lubrifiant de la revendication 1, comprenant en outre un conservateur à une concentration allant de 0,01% en poids à 1,00% en poids de la composition, dans laquelle le conservateur comprend de préférence du benzoate de sodium.

3. Composition de gel lubrifiant selon la revendication 1, dans laquelle l'agent épaississant comprend de la gomme de guar à une concentration allant de 1% en poids à 5% en poids de la composition.

4. Composition de gel lubrifiant selon la revendication 1, dans laquelle l'agent épaississant comprend de la méthylcellulose à une concentration allant de 0,75% en poids à 3,75% en poids de la composition.

5. Composition de gel lubrifiant selon la revendication 1, dans laquelle l'agent épaississant comprend de l'oxyde de polyéthylène à une concentration allant de 0,2% en poids à 5% en poids de la composition.

6. Composition de gel lubrifiant selon la revendication 1, dans laquelle le détergent comprend du laurylsulfate de sodium à une concentration allant de 1% en poids à 4% en poids de la composition.

7. Composition de gel lubrifiant selon la revendication 1, dans laquelle le détergent comprend du dioctylsulfosuccinate de sodium à une concentration allant de 0,03% en poids à 0,07% en poids de la composition.

8. Composition de gel lubrifiant selon la revendication 1, dans laquelle le tensioactif comprend un tensioactif non ionique, anionique et/ou amphotère.

9. Composition de gel lubrifiant selon la revendication 1, dans laquelle le tensioactif comprend de préférence un tensioactif amphotère à une concentration allant de 2% en poids à 40% en poids du tensioactif.

10. Composition de gel lubrifiant selon la revendication 1, dans laquelle l'eau est de l'eau déionisée.

11. Composition de gel lubrifiant selon la revendication 1, comprenant en outre un additif choisi dans le groupe constitué essentiellement par : un colorant, un agent luminescent et un agent phosphorescent.

12. Système de distribution de composition de gel lubrifiant sous pression pour la défense personnelle, comprenant :
(a) un réservoir sous pression contenant la composition selon l'une quelconque ou plusieurs des revendications précédentes et ayant une sortie de fluide à travers laquelle la composition peut s'écouler ;
(b) une vanne reliée à la sortie de fluide du réservoir ayant une position fermée empêchant l'écoulement de la composition hors du réservoir et une position ouverte permettant l'écoulement de la composition hors du réservoir ; et
(c) une tête d'extincteur positionnée sur un plafond ou un mur et adaptée pour recevoir et pulvériser la composition lorsque la vanne est ouverte.

13. Système de distribution de composition de gel lubrifiant sous pression selon la revendication 12, dans lequel un déclencheur est positionné à distance du système de distribution et relié à la vanne par un fil ou par une technologie sans fil moyennant quoi l'activation du déclencheur ouvre la vanne.

14. Système de distribution de composition de gel lubrifiant sous pression selon l'une quelconque ou plusieurs des revendications 12 et 13, comprenant en outre un système de remplissage, le système de remplissage comprenant :
(a) une entrée de fluide sur le réservoir à travers laquelle la composition peut s'écouler :
(b) une vanne reliée à l'entrée de fluide adaptée pour empêcher l'écoulement de la composition hors du réservoir à travers l'entrée de fluide ;
(c) un raccord de remplissage relié à la vanne et adapté pour recevoir la composition pour remplir le réservoir ; et
(d) un manomètre relié au réservoir pour surveiller la pression à l'intérieur du réservoir.
